# EUROPÄISCHE PATENTANMELDUNG

(11) **EP 1 994 832 A1**
(43) Veröffentlichungstag der Anmeldung: **26.11.2008**
(21) Anmeldenummer: 07108348.9
(22) Anmeldetag: 16.05.2007
(51) Int. Cl.: A23C 9/152, A23L 2/54, A23L 2/60

(54) **Distickstoffoxid-imprägnierte Getränke**

(71) Anmelder: Döhler GmbH, 64295 Darmstadt (DE)
(72) Erfinder: Tretzel, Joachim, Dr., 64342 Seeheim-Jugenheim (DE); Holdenried, Thomas, 55286 Wörrstadt (DE); Krug, Harald, 69231 Rauenberg (DE); Wydra, Markus, Dr., 64673 Zwingenberg (DE)
(74) Vertreter: Schreiber, Christoph

(57) **Zusammenfassung**

Getränk enthaltend N₂O in einer Konzentration von 0,5 bis 10g/l N₂O und Verfahren und Dispenser zu dessen Herstellung sowie Verwendung von Distickstoffoxid zur Steigerung des Süßeindrucks, der Geschmacksverstärkung von Aromen und zur Veränderung des Mundgefühls.

## Beschreibung

Die vorliegende Erfindung betrifft Getränke und Verfahren zu ihrer Herstellung.

Distickstoffoxid (Lachgas, N₂O) ist in der Lebensmittelindustrie seit langer Zeit bekannt. Es wird eingesetzt als Treibgas zum Aufschäumen von milchprodukthaltigen Zubereitungen, beispielsweise in Form von Sprühsahne, zur Unterdrückung der Fettoxidation, als Packgas aber teilweise auch wegen seiner bioziden und damit mikrobiologisch-stabilisierenden Wirkung. Als Zusatzstoff ist es unter der Nummer E942 zugelassen.

DE 101 28 303 beschreibt die Verwendung von Gasen zur Dosierung von Aromen, wobei unter anderem auch Lachgas eingesetzt werden kann.

EP 0 474 301 beschreibt die Verwendung von N₂O als Treibgas für pastöse Lebensmittel.

EP 1 368 254 beschreibt eine Trinkflasche zur Dosierung von gashaltigen Produkten.

Getränke werden häufig mit CO₂ versetzt, um ihnen einen sprudelnden, erfrischenden Geschmack zu geben. Es besteht jedoch weiterhin ein Bedarf nach Getränken mit verbesserten Eigenschaften.

Aufgabe der vorliegenden Erfindung war es, solche Getränke mit verbesserten Eigenschaften zur Verfügung zu stellen.

Überraschenderweise wurde gefunden, dass durch die Verwendung von N₂O in Getränken verbesserte Eigenschaften erhalten werden können.

Gegenstand der vorliegenden Erfindung ist daher ein Getränk, enthaltend N₂O in einer Konzentration von 0,5 bis 10 g/l N₂O, bevorzugt 1 bis 5 g/l.

Bevorzugt wird das Distickstoffoxid zusammen mit Kohlendioxid verwendet, wobei der Gehalt an Kohlendioxid bevorzugt zwischen 0,5 und 10 g/l, mehr bevorzugt bei 1 - 5 g/l liegt.

Das Distickstoffoxid wird bevorzugt durch geeignete, industriell verwendete Imprägniereinrichtungen in das Getränk eingebracht. Die Imprägnierung wird zweckmäßig so durchgeführt, dass die zum Imprägnierdruck zugehörige Gleichgewichtslöslichkeit im Getränk eingestellt bzw. bestmöglich approximiert wird. In der Konsequenz bedeutet dies eine Temperierung der Flüssigkeit auf Raumtemperatur und kleiner, da mit Zunahme der Temperatur einer Flüssigkeit in der Regel die Gleichgewichtslöslichkeit eines darin gelösten Gases abnimmt. Zudem wird darauf geachtet, dass eine möglichst große Flüssig-Gas-Grenzfläche angeboten wird, um einer kinetischen Hemmung der Einstellung des Löslichkeitsgleichgewichts entgegen zu wirken. Insbesondere bei einer feinperligen Imprägnierung ist das Phänomen der spontanen Gasentbindung stark unterdrückt.

Die jeweilige Löslichkeit von N₂O in Wasser ist abhängig von dem vorliegenden Druck und der Temperatur der Lösung. Typischerweise sind daher die erfindungsgemäßen Getränke in einer Getränkeverpackung enthalten, die möglichst gasdicht verschlossen ist und auf den maximal möglichen Überdruck ausgelegt ist. Entsprechende Verpackungen sind auch bei kohlesäurehaltigen Getränken in Form von Flaschen oder Dosen üblich.

Der bevorzugte Druckbereich für die Imprägnierung des erfindungsgemäßen Getränkes liegt im Bereich von 10.000 bis 500.000 Pa Überdruck.

Grundsätzlich kann die Herstellung solcher N₂O-haltiger Getränke auch im Haushaltsbereich durch kleine Gaskartuschen mit Vorrichtung verwendet werden, wie sie zur Zeit zur Karbonisierung von Getränken verwendet werden. Im Gaststättenbereich können auch übliche Dispenser eingesetzt werden.

Typische Getränke, die erfindungsgemäß mit N₂O begast werden, sind Erfrischungsgetränke. Solche Erfrischungsgetränke enthalten typischerweise zusätzlich eine oder mehrere der folgenden Substanzen:
- Saft/Saftkonzentrat(e), Milch und/oder Milchkomponenten, Bier.
- organische Säuren, insbesondere Zitronensäure und/oder anorganische Säuren wie Orthophosphorsäure.
- Zucker oder Zuckerersatzstoffe, wie beispielsweise Invertzucker, Aspartam, Acesulfam.
- Aromen, wie beispielsweise Zitronenaroma, Orangenaroma.
- Säureregulatoren, wie beispielsweise Trinatriumcitrat.
- Stabilisatoren, wie beispielsweise Johannisbrotkernmehl.

Erstaunlicherweise zeigt sich, dass die Einbringung von Dickstickstoffoxid den Süßeindruck eines Getränkes steigert. Es ist also auf diesem Wege möglich, eine geringere Menge an Zucker zu verwenden und trotzdem einen gleichen Süßeindruck zu erzielen.

Darüber hinaus zeigt sich überraschenderweise, dass Aromen stärker in Erscheinung treten.

Weiterhin zeigt sich, dass das Mundgefühl eines entsprechenden Getränkes von dem Mundgefühl eines mit CO₂ carbonisierten Getränkes abweicht. Der Textureindruck der Gasentbindung wird als feiner, schaumiger, samtiger empfunden.

Die grundsätzliche mikrobiozide Eigenschaft von N₂O könnte auch unter Konservierungsgesichtspunkten relevant sein. Denkbar wäre unter anderem auch der Einsatz bei pH-Werten, bei denen klassische Systeme wie Benzoesäure versagen.

Gegenstand der Erfindung ist daher auch die Verwendung von Distickstoffoxid zur Steigerung des Süßeindruck eines Getränkes durch Einbringen von Distickstoff in ein wässriges Getränk, die Verwendung von Distickstoffoxid zur Geschmacksverstärkung von Aromen in Getränken und die Verwendung von Distickstoffoxid zur Veränderung des Mundgefühls eines Getränks.

Grundsätzlich ist es möglich, das erfindungsgemäße Getränk industriell herzustellen und verpackt anzubieten. Es ist grundsätzlich auch möglich, dass in Gaststätten oder Haushalten entsprechende Produkte mit N₂O versetzt werden, ähnlich wie dies beispielsweise mit kohlesäurehaltigen Getränke üblich ist. Daher ist Gegenstand der Erfindung auch ein Dispenser zur Herstellung der erfindungsgemäßen Getränke.

Die Erfindung wird durch die folgenden Beispiele näher erläutert.

### Beispiel 1

Ein Referenzgetränk mit 5 g/l CO₂, 1 g/l Zitronensäure und 50 g/l Invertzucker, wurde mit einem Getränk verglichen, das 4 g/l N₂O, 5 g/l CO₂, 1 g/l Zitronensäure und 40 g/l Invertzucker enthielt. Testpersonen hatten zwischen dem Vergleichsgetränk und dem erfindungsgemäßen Getränk den gleichen Süßeindruck, d. h. durch Einsatz von N₂O können etwa 20% der ursprünglich verwendeten Zuckermenge eingespart werden.

### Beispiel 2

Das erfindungsgemäße Getränk und das Referenzgetränk wurde von Testern in einem nach DIN 10954genormten Verfahren verkostet. Der Textureindruck der Gasentbindung wurde für das erfindungsgemäße Getränk als feiner, schaumiger, samtiger beschrieben.

### Beispiel 3

Das Referenzgetränk und das erfindungsgemäße Getränk wurden mit Aromen, wie Vanille, Schokolade, Zimt versetzt und verkostet. Die Tester beobachteten bei den erfindungsgemäßen Getränken einen stärkeren Aromaeindruck als bei den zugehörigen Referenzgetränken.

## Patentansprüche

1. Getränk enthaltend N₂O in einer Konzentration von 0,5 bis 10 g/l N₂O.

2. Getränk nach Anspruch 1, **dadurch gekennzeichnet, dass** zusätzlich 0,5 bis 10 g/l CO₂ oder 20 bis 500 mg/l O₂ enthalten sind.

3. Getränk nach Anspruch 1 oder 2, **dadurch gekennzeichnet, dass** organische Säuren, Zucker und/oder Zuckerersatzstoffe enthalten sind.

4. Verwendung von Distickstoffoxid zur Steigerung des Süßeindrucks eines Getränkes durch Einbringen von Distickstoffoxid in ein wässriges Getränk.

5. Verwendung von Distickstoffoxid zur Geschmacksverstärkung von Aromen in Getränken.

6. Verwendung von Distickstoffoxid zur Veränderung des Mundgefühls eines Getränkes.

7. Verfahren zur Herstellung eines Getränkes nach einem der Ansprüche 1 bis 3 mit folgenden Schritten:
- Bereitstellen eines Getränkes;
- Einbringen von N₂O bis zu einer Konzentration vom 0,5 bis 10 g/l N₂O,entweder durch direktes Aufpressen oder Verwendung entsprechend vorimprägnierter Einstellkomponenten;
- gasdichtes Verpacken des Getränkes.

8. Dispenser zur Herstellung N₂O-haltiger Getränke gemäß mindestens einem der Ansprüche 1 bis 3 umfassend einen N₂O-Vorratsbehälter und eine Vorrichtung zum Einbringen von N₂O in Getränke.
